# EUROPEAN PATENT APPLICATION

(11) **EP 4 365 006 A1**
(43) Date of publication of application: **08.05.2024**
(21) Application number: 23208036.6
(22) Date of filing: 06.11.2023
(51) Int. Cl.: B60L 1/00, B60L 58/12

(54) **METHOD AND SYSTEM FOR MANAGING POWER CONSUMPTION IN A BATTERY ELECTRICAL VEHICLE (BEV)**

(30) Priority: 07.11.2022 US 202263382647 P
(71) Applicant: Carrier Corporation, Palm Beach Gardens, FL 33418 (US)
(72) Inventor: BEAUFRERE, Florian, 76520 Franqueville Saint Pierre (FR); CHAROULET, Guillaume, 76520 Franqueville Saint Pierre (FR)
(74) Representative: Dehns

(57) **Abstract**

A method for managing power consumption in a BEV (100) includes obtaining real time vehicle data via an ECU (111) of the BEV and receiving information regarding deliveries that are planned by a user for a specific day based on a user input or data acquisition from a remote database (119). The method further includes determining consumption of energy for completion of the deliveries on the specific day based on the obtained real time vehicle data and the received information and then calculating a distance that can be traveled by the BEV based on the determined consumption of energy. The method further includes determining a temperature difference between an internal temperature of a TRU (101) of the BEV and an external temperature outside the TRU in real time, estimating an impact of the determined temperature difference on the determined consumption of energy, and thereafter displaying the results of the estimation on an HMI (117).

## Description

### FIELD OF THE INVENTION

The invention relates to the field of Battery Electrical Vehicles (BEVs). In particular, the invention relates to a method and system for managing power consumption in the BEV.

### BACKGROUND

Refrigeration units in light commercial vehicles (LCVs) or transportation trucks are not limited in autonomy because they have their own diesel engine and tank, or it is directly related and communicated to the driver through the remaining kilometers of the LCVs or the transportation trucks.

Further, in battery electrical vehicles (BEVs), the autonomy is drastically more limited than the thermal engines, meaning every single kWh taken into a truck battery of an electric transportation truck is to be tracked and well communicated to the end user to help him set up in his day-to-day usage.

It would thus be advantageous to provide a method and system that may automatically forecast the consumption of energy by the BEV during the day and estimate the impact of the forecasted consumption of energy on the BEV's remaining kilometers or BEV's battery pack cooling autonomy.

### SUMMARY

This summary is provided to introduce a selection of concepts in a simplified format that are further described in the detailed description of the invention. This summary is not intended to identify key or essential inventive concepts of the invention, nor is it intended for determining the scope of the invention.

According to a first aspect of the invention there is provided a method for managing power consumption in a BEV having a transport refrigeration unit (TRU). The method includes obtaining real time vehicle data via an electronic control unit (ECU) of the BEV. The real time vehicle data includes at least a state of charge of an energy storage unit of the BEV, each of a power limitation maximum current and a power limitation maximum voltage of the energy storage unit, a charging rate of the energy storage unit, information related to load conditions of the BEV, a health status of the energy storage unit, and live weather forecast information. The method further includes receiving information regarding one or more deliveries that are planned by a user for a specific day, based on one of a user input or data acquisition from a remote database. The method further includes determining consumption of energy for completion of the one or more deliveries on the specific day based on the obtained real time vehicle data and the received information regarding the one or more deliveries and calculating a distance that can be traveled by the BEV based on the determined consumption of energy. Once the distance that can be traveled by the BEV is calculated, thereafter the method further includes determining a temperature difference between an internal temperature of the TRU and an external temperature outside the BEV in real time and estimating an impact of the determined temperature difference on the determined consumption of energy. Thereafter, the method includes displaying a result of the estimation on a human machine interface (HMI) of the BEV. The displayed result of the estimation indicates an updated distance that can be traveled by the BEV based on the estimated impact of the temperature difference.

Optionally, the method may further include calculating the updated distance that can be traveled by the BEV based on the estimated impact of the determined temperature difference on the determined consumption of energy and thereafter displaying the updated distance on the HMI. The updated distance may correspond to one of a decrease or increase in the calculated distance.

Optionally, in a case if the updated distance is less than the calculated distance then the method may further include displaying a current status of a remaining distance that can be traveled by the BEV on the HMI based on the determined consumption of energy.

Optionally, the method may further include determining, using a machine learning model, information regarding a driving pattern of the user while completing one or more deliveries in past based on historical information of the user. The historical information includes associated vehicle parameters related to activities of the user in the past. Thereafter, the method may further include calculating the distance that can be traveled by the BEV based on the determined consumption of energy and the determined information regarding the driving pattern of the user.

Optionally, the associated vehicle parameters related to the activities of the user include at least a number of times BEV's doors are opened by the user, a duration for which the BEV's doors were kept open by the user, a number of times BEV's brakes are applied by the user while completing the one or more deliveries, an average acceleration of the BEV while completing the one or more deliveries, and a potential route taken by the user to complete the one or more deliveries in the past.

Optionally, the energy storage unit includes one or more batteries.

Optionally, the ECU receives the real time vehicle data via one of a transceiver or an antenna included in the ECU.

Optionally, the HMI is installed in a driving compartment of the BEV and the user input is received via the HMI.

Optionally, for determining the temperature difference, the method may further include detecting the internal temperature of the TRU using a temperature sensor installed within the TRU and determining an external temperature outside the TRU using a pyranometer sensor. Thereafter, the method may further include determining the temperature difference based on a difference between the internal temperature of the TRU and the external temperature outside the TRU.

Optionally, the method may further include estimating a cooling time of the TRU based on the determined consumption of energy and the determined temperature difference and notifying an impact of the estimated cooling time of the TRU to the user via the HMI based on the calculated distance.

Optionally, the live weather forecast information includes at least temperature information, humidity information, wind speed, a direction of the wind speed, and information indicating one of sunny or cloudy weather conditions.

Optionally, the information related to the load conditions of the BEV includes at least a type of cargo of the BEV, a size of the cargo, weight of the cargo, and volume of goods in the cargo. The displayed result of the estimation may further indicate a level of accuracy of the estimation along with information related to remaining hours of refrigeration capacity of the TRU and remaining autonomy of the BEV. The level of accuracy of the estimation corresponds to one of a high accuracy level, average accuracy level, or low accuracy level.

Optionally, the method may further includes displaying the result of the estimation on one of a Graphical User Interface (GUI) of a mobile application using a telematic connection or a GUI of an external device connected to the ECU using a Wi-Fi or a Bluetooth connection.

According to a second aspect of the invention there is provided a system for managing power consumption in a BEV that includes an electronic control unit (ECU) including a transceiver and at least one controller, an energy storage unit including one or more batteries, a TRU, and an HMI. The at least one controller is configured to obtain real time vehicle data via the ECU of the BEV and receive, based on one of a user input via the HMI or data acquisition from a remote database, information regarding one or more deliveries that are planned by a user for a specific day. The real time vehicle data includes at least a state of charge of an energy storage unit of the BEV, each of a Power limitation maximum current and a power limitation maximum voltage of the energy storage unit, a charging rate of the energy storage unit, information related to load conditions of the BEV, a health status of the energy storage unit, and live weather forecast information. The at least one controller is further configured to determine consumption of energy for completion of the one or more deliveries on the specific day based on the obtained real time vehicle data and the received information regarding the one or more deliveries and calculate a distance that can be traveled by the BEV based on the determined consumption of energy. Once the distance that can be traveled by the BEV is calculated, thereafter the at least one controller is further configured to determine a temperature difference between an internal temperature of the TRU and an external temperature outside the TRU and estimate an impact of the determined temperature difference on the determined consumption of energy. Thereafter, the at least one controller is further configured to control the HMI to display a result of the estimation. The displayed result of the estimation indicates an updated distance that can be traveled by the BEV based on the estimated impact of the temperature difference.

Optionally, the at least one controller may be further configured to calculate the updated distance that can be traveled by the BEV based on the determined temperature difference and control the HMI to display the updated distance. The updated distance corresponds to one of a decrease or increase in the calculated distance.

Optionally, the at least one controller may be further configured to control, in a case if the updated distance is less than the calculated distance, the HMI to display a current status of a remaining distance that can be traveled by the BEV based on the determined consumption of energy.

Optionally, the at least one controller may be further configured to determine, using a machine learning model, information regarding a driving pattern of the user while completing one or more deliveries in past based on historical information of the user, wherein the historical information includes associated vehicle parameters related to activities of the user in the past. Thereafter, the at least one controller may be further configured to calculate the distance that can be traveled by the BEV based on the determined information regarding the driving pattern of the user and the determined consumption of energy.

Optionally, the associated vehicle parameters related to the activities of the user include a number of times the BEV's doors are opened by the user, a duration for which the BEV's doors were kept open by the user, a number of times BEV's brakes are applied by the user while completing the one or more deliveries, an average acceleration of the BEV while completing the one or more deliveries, and a potential route taken by the user to complete the one or more deliveries in the past.

Optionally, the disclosed system further comprises a temperature sensor installed within the TRU and a pyranometer sensor. For determining the temperature difference, the at least one controller is further configured to detect the internal temperature of the TRU using the temperature sensor, determine an external temperature outside the TRU using the pyranometer temperature sensor, and then determine the temperature difference based on a difference between the internal temperature of the TRU and the external temperature outside the TRU.

Optionally, the at least one controller is further configured to estimate a cooling time of the TRU based on the determined consumption of energy and the determined temperature difference and control the HMI to notify an impact of the estimated cooling time of the TRU based on the calculated distance.

To further clarify the advantages and features of the method and system, a more particular description of the method and system will be rendered by reference to specific embodiments thereof, which is illustrated in the appended drawings. It is appreciated that these drawings depict only typical embodiments of the invention and are therefore not to be considered limiting its scope. The invention will be described and explained with additional specificity and detail with the accompanying drawings.

### BRIEF DESCRIPTION OF THE DRAWINGS

Certain exemplary embodiments will become better understood by way of example only when the following detailed description is read with reference to the accompanying drawings in which like characters represent like parts throughout the drawings, wherein:
**FIG. 1** illustrates a light commercial electrical vehicle (LCEV) as the BEV with a traction battery, ECU, and TRU;
**FIG. 2** illustrates an electrical transportation truck as the BEV with the traction battery, ECU, and TRU;
**FIG. 3** illustrates a flowchart of method steps for managing power consumption in the BEV;
**FIG. 4** illustrates an example illustration of the unit average consumption in between each phase of operation of the BEV in different weather conditions;
**FIG. 5** an example HMI interface indicating user input and current temperature readings inside and outside the refrigeration system of the BEV 100;
**FIG. 6** illustrates another example HMI interface indicating output results provided to the user of the BEV; and
**FIG. 7** illustrates an exemplary hardware configuration of the ECU.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the invention. Furthermore, in terms of the construction of the device, one or more components of the device may have been represented in the drawings by conventional symbols, and the drawings may show only those specific details that are pertinent to understanding the embodiments of the invention so as not to obscure the drawings with details that will be readily apparent to those of ordinary skill in the art having the benefit of the description herein.

### DETAILED DESCRIPTION

It should be understood at the outset that although illustrative implementations of embodiments are illustrated below, system and method may be implemented using any number of techniques. The invention should in no way be limited to the illustrative implementations, drawings, and techniques illustrated below, including the exemplary design and implementation illustrated and described herein, but may be modified within the scope of the appended claims along with their full scope of equivalents.

The term "some" as used herein is defined as "one, or more than one, or all." Accordingly, the terms "one," "more than one," but not all" or "all" would all fall under the definition of "some." The term "some embodiments" may refer to no embodiments or one embodiment or several embodiments or all embodiments. Accordingly, the term "some embodiments" is defined as meaning "one embodiment, or more than one embodiment, or all embodiments."

The terminology and structure employed herein are for describing, teaching, and illuminating some embodiments and their specific features and elements and do not limit, restrict, or reduce the scope of the claims or their equivalents.

More specifically, any terms used herein such as but not limited to "includes," "comprises," "has," "have" and grammatical variants thereof do not specify an exact limitation or restriction and certainly do not exclude the possible addition of one or more features or elements, unless otherwise stated, and must not be taken to exclude the possible removal of one or more of the listed features and elements, unless otherwise stated with the limiting language "must comprise" or "needs to include."

The term "unit" used herein may imply a unit including, for example, one of hardware, software, and firmware or a combination of two or more of them. The "unit" may be interchangeably used with a term such as logic, a logical block, a component, a circuit, and the like. The "unit" may be a minimum system component for performing one or more functions or may be a part thereof.

Unless otherwise defined, all terms, and especially any technical and/or scientific terms, used herein may be taken to have the same meaning as commonly understood by one having ordinary skill in the art.

Embodiments will be described below in detail with reference to the accompanying drawings.

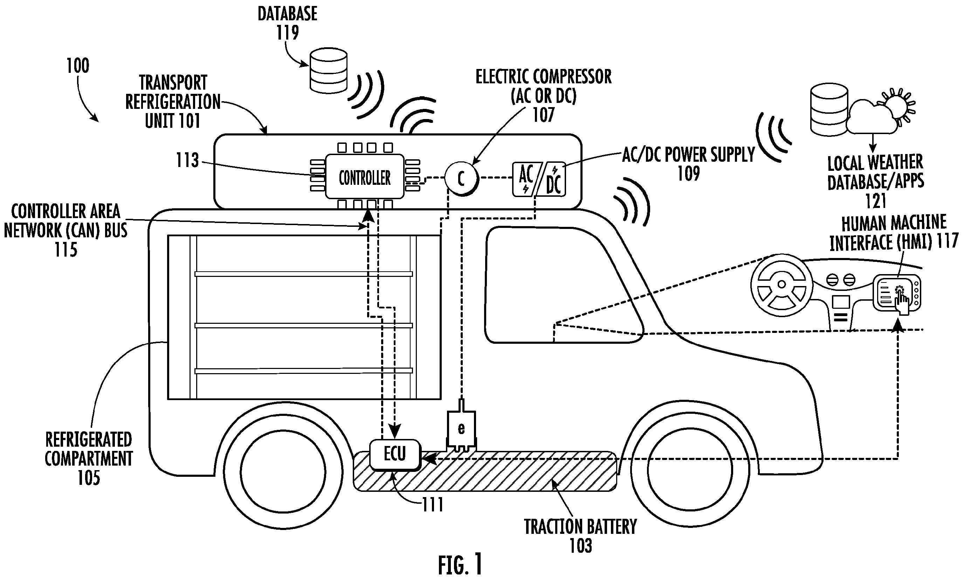

**FIG. 1** illustrates a light commercial electrical vehicle (LCEV) as a BEV 100, in accordance with an embodiment of the invention. The BEV 100 comprises a traction battery 103 for providing motive power to the BEV 100 during a driving mode of operation of the BEV 100.

The traction battery 103 is configured to provide power to the BEV 100 during the driving period, such as a time period of up to 5 to 10 hours, or a distance range of 50 to 300 miles depending on the capacity of the traction battery 103. The traction battery 103 is configurable to be charged when connected to a power source. The traction battery 103 can also be referred to as "an energy storage unit" without deviating from the scope of the invention, as set out in the appended claims.

The BEV 100 further comprises a transport refrigeration unit (TRU) 101 and a refrigerated compartment 105. The TRU 101 comprises an electric compressor 107 and the TRU 101 is configured to cool the refrigerated compartment 105 using the electric compressor 107. During the driving mode of operation of the BEV 100, when the traction battery 103 provides motive power to the BEV 100, the traction battery 103 also provides power to the TRU 101 through an AC/DC power supply 109, so that the TRU 101 can maintain a temperature of the refrigerated compartment 105. The power supply system 109 comprises a controller 113 configured to control the operation of the power supply system 109 to provide power to the electric compressor 107.

The BEV 100 further comprises an Electronic Control Unit (ECU) 111. The ECU 111 may comprise one or more controllers (although not shown in FIG. 1) configured to control the overall operation modes of the BEV 100.

The controller 113 is configured to communicate with the ECU 111 via a Controller Area Network (CAN) bus 115. The CAN bus 115 is commonly used in relation to vehicle systems and, advantageously, the controller 113 of the power supply system 109 can make use of a pre-existing bus connection of the BEV 100.

The TRU 101 may also include a plurality of sensors to measure the temperature inside the refrigeration compartment 105 and to measure an external temperature outside the TRU 101. The plurality of sensors may include, but are not limited to, temperature sensors, evaporator leaving temperature sensors, a pyranometer sensor, supply, return, and ambient air temperature sensors.

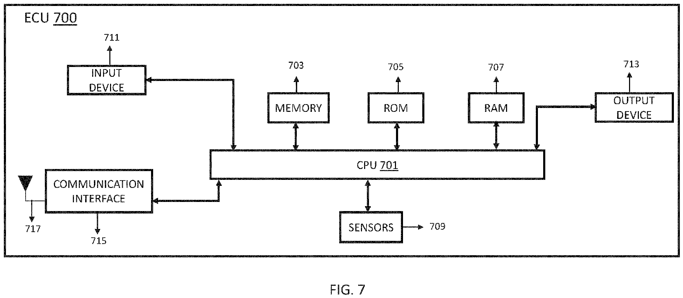

The ECU 111 may further comprise a transceiver (e.g., a communication interface shown in FIG. 7), and an antenna connected to the communication interface for obtaining real time vehicle data from the components of the BEV 100 or components external to the BEV 100. The ECU 111 may obtain historical information from a database 119 having vehicle information regarding operation modes of the BEV 100 used by the user in the past and information collected during that operation mode. The database 119 may be external or may be embedded within the BEV 100. The ECU 111 may also obtain live weather forecast information from one of a local weather databases/weather application 121.

The BEV 100 may further comprise a Human Machine Interface (HMI) 117 installed in a driving compartment of the BEV 100. The HMI 117 is configured to display messages or notifications to the user of the BEV 100 under the control of ECU 111. Further, the ECU 111 may be configured to receive user inputs via the HMI 117 when the user interacts with the HMI 117.

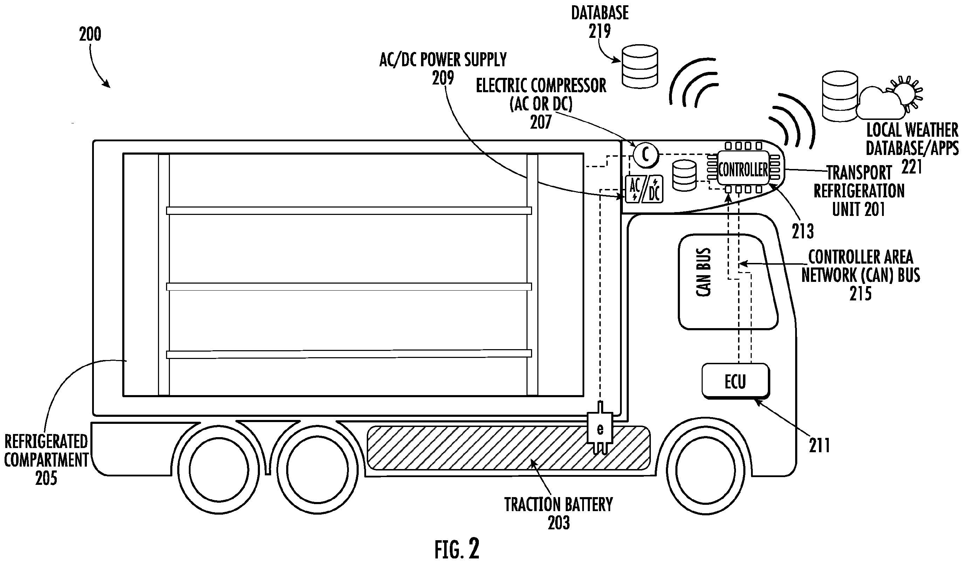

**FIG. 2** illustrates an electrical transportation truck as a BEV 200. The BEV 200 comprises a TRU 201 including a controller 213 and an electric compressor 207, a traction battery 203 for providing power to the TRU 201 through an AC/DC power supply 209, and a refrigerated compartment 205, an ECU 211, and a CAN bus 215. The BEV 200 further comprises an HMI similar to that of the HMI 117 although not shown in FIG. 2.

The functionalities and operations performed by the components and units of the BEV 200 are similar to that of the BEV 100 of FIG. 1. Therefore, a description of the functionalities and the operations performed by the components and units of the BEV 200 is omitted herein for the sake of brevity and ease of explanation.

The BEV 200 operates in a similar manner as the BEV 100 as described above. The ECU 211 of the BEV also comprises a transceiver (e.g., a communication interface shown in FIG. 7), and an antenna connected to the communication interface for obtaining real time vehicle data from the components of the BEV 200 or components external to the BEV 200. The ECU 211 of the BEV 200 may obtain historical information from a database 219 having vehicle information regarding operation modes of the BEV 200 used by the user in the past and information collected during that operation mode. The database 219 may be external or may be embedded within the BEV 200. The ECU 211 may also obtain live weather forecast information from one of a local weather databases/weather application 221. It is to be noted that the database 219 and the local weather database/weather application 221 have the same data as that of the database 119 and Local weather database/weather application 121, without any deviation from the scope of the invention, as set out in the appended claims.

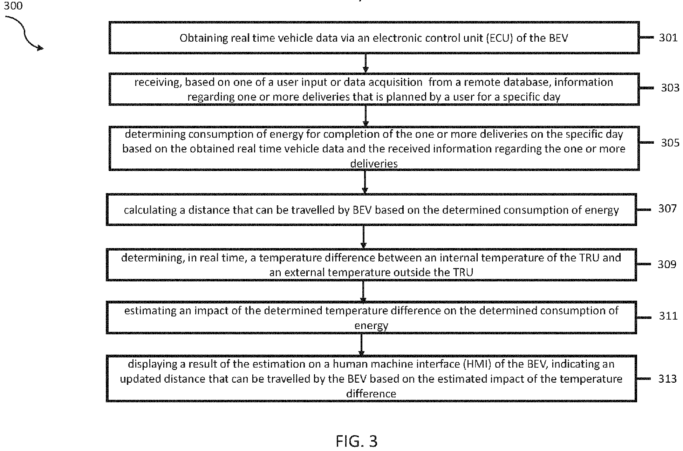

**FIG. 3** illustrates a flowchart of method steps for managing power consumption in the BEV. FIG. 3 depicts a method 300 that is executed by the one or more controllers of the ECU 111 of FIG. 1 or ECU 211 of FIG. 2 of the drawings. For ease of explanation, "the controller of the ECU 111" is used for describing the controlling operations of the BEV 100 or 200.

At step 301 of method 300, the controller of the ECU 111 obtains real time vehicle data including at least a state of charge of an energy storage unit of the BEV, and each of a power limitation maximum current and a power limitation maximum voltage of the energy storage unit, a charging rate of the energy storage unit, information related to load conditions of the BEV, a health status of the energy storage unit, and live weather forecast information. The information related to the load conditions of the BEV includes at least but is not limited to, the type of cargo of the BEV, size of the cargo, the weight of the cargo, and volume of goods in the cargo. The live weather forecast information is received by the database 121 and includes at least, but is not limited to, temperature information (cold, hot, or moderate), humidity information, wind speed, a direction of the wind speed, information indicating one of the sunny or cloudy weather conditions. The flow of the method 300 now proceeds to (step 303).

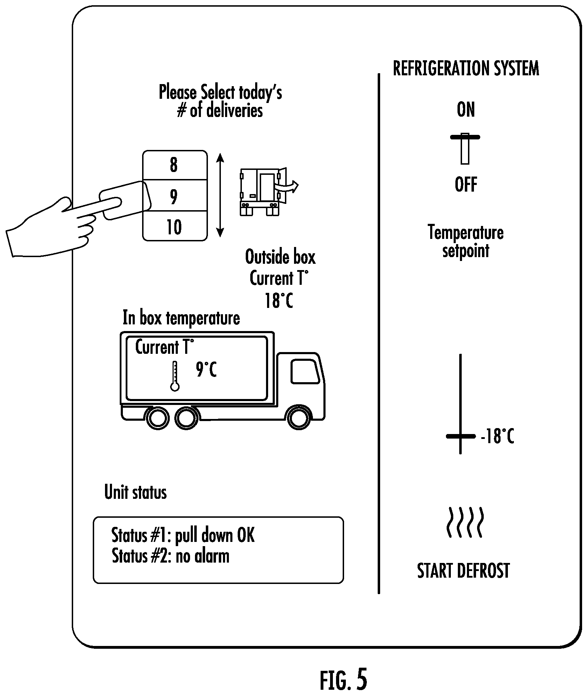

At step 303, the controller of the ECU 111 receives, based on one of a user input via the HMI 117 or user's data acquisition from a remote database, information regarding one or more deliveries that are planned by the user of the BEV 100 for a specific day. For example, the user may input a number of deliveries to be completed during a complete day via a user interface of the HMI 117. As a non-limiting example, as shown in FIG. 5, the user inputs a number of deliveries to be completed as 9 deliveries. Other than this, different user inputs like the number of door openings, the number of stops in the completion of the deliveries, load carried by the BEV 100, type of goods (perishable or non-perishable), size of the goods, and the like can also be entered by the user manually to the vehicle system via the GUI of the HMI 117. This user information may also be acquired by the controller of the ECU 111 from a remote database where these details have been updated in advance. Further, the controller of the ECU 111 may also acquire the user information related to the one or more deliveries planned from the remote database using a using a machine learning model. The flow of the method 300 now proceeds to (step 305).

At step 305, subsequent to the reception of the user inputs and the real time vehicle data, the controller of the ECU 111, based on the obtained real time vehicle data and the received user input information regarding the one or more deliveries, determines consumption of energy stored in the traction battery 103 of the BEV 100 to be used for completion of the one or more deliveries on the specific day. In particular, the controller of the ECU 111 analyzes the received user input information and the obtained real time vehicle data, and in accordance with the current vehicle operating conditions, determines the consumption of energy stored in the traction battery 103 to be used for completing the one or more deliveries planned by the user for the specific day. The flow of the method 300 now proceeds to (step 307).

At step 307, the controller of the ECU 111 calculates a distance that can be traveled by the BEV 100 based on the determined consumption of energy. In addition to the determined consumption of energy, the controller of the ECU 111 may also use information regarding a driving pattern of the user while completing one or more deliveries in past to calculate the distance that can be traveled by the BEV 100. Hence, the controller of the ECU 111 may further determine, using a machine learning model, information regarding a driving pattern of the user while completing one or more deliveries in past based on historical information of the user. The historical information includes associated vehicle parameters related to the activities of the user in the past. Non-limiting examples of the associated vehicle parameters related to the activities of the users may include, but are not limited to, at least a number of times doors of the BEV 100 are opened by the user, a duration for which the doors of the BEV 100 were kept open by the user, a number of times brakes of the BEV 100 applied by the user while completing the one or more deliveries in the past, an average acceleration of the BEV 100 while completing the one or more deliveries in the past, and a potential route taken by the user to complete the one or more deliveries in the past. Once the information regarding the driving pattern of the user is determined, then the controller of the ECU 111 may calculate the distance that can be traveled by the BEV 100 based on each of the determined consumption of energy and the determined information regarding the driving pattern of the user. The flow of the method 300 now proceeds to step 309.

At step 309, the controller of the ECU 111 further determines a temperature difference between an internal temperature of the TRU 101 and an external temperature outside the TRU 101. In particular, for determining the temperature difference between the internal temperature of the TRU 101 and the external temperature outside the TRU 101, the controller of the ECU 111 receives temperature readings of the TRU's internal temperature from the controller 113 and controls the pyranometer sensor to measure the external temperature outside the TRU 101. The controller 113 is configured to measure the internal temperature of the refrigeration compartment 105 using a temperature sensor. Thereafter, the controller of the ECU 111 compares the detected internal temperature of the TRU 101 and the determined external temperature outside the TRU 101 and then determines the temperature difference between the internal temperature of the TRU 101 and the external temperature outside the TRU 101 based on the comparison.

**FIG. 5** illustrates an example HMI interface indicating a number of deliverables to be completed by the user for a specific day as user input and the determined current temperatures inside the refrigeration compartment and outside the refrigeration system or the BEV 100. The flow of the method 300 now proceeds to step 311.

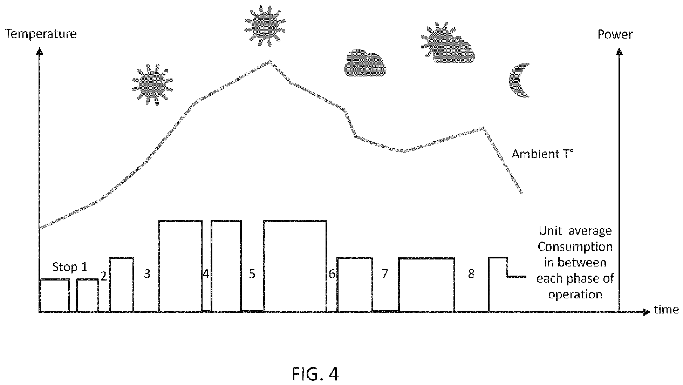

At step 311, the controller of the ECU 111 estimates the impact of the determined temperature difference on the determined consumption of energy. As an example, the controller of the ECU 111 may estimate whether the temperature difference can have an impact on the remaining energy in the traction battery 103. If a result of this estimation indicates that the remaining energy of the traction battery 103 can be impacted due to the temperature difference, then in such case, the controller of the ECU 111 may calculate the updated distance that can be traveled by the BEV 100 based on the estimated impact of the determined temperature difference on the consumption of the energy. The updated distance corresponds to one of a decrease or increase in the calculated distance. An example illustration of the unit average consumption in between each phase of operation of the BEV 100 in different weather conditions is shown in **FIG. 4** of the drawings. As can be seen in FIG. 4 of the drawings, during sunny weather the power consumption is more compared to when the weather condition is cloudy. During sunny weather conditions, the ambient temperature outside the BEV 100 increases and there is a high temperature difference between the refrigeration temperature and the external temperature outside the BEV 100 and therefore results in high energy consumption. Similarly, during cloudy or cool weather conditions, the ambient temperature outside the BEV 100 decreases and there is a decrease in the temperature difference between the refrigeration temperature and the external temperature outside the BEV 100 and therefore results in low energy consumption. The flow of the method 300 now proceeds to (step 313).

At step 313, the controller of the ECU 111 controls the HMI 117 to display a result of the estimation indicating the updated distance that can be traveled by the BEV 100 based on the estimated impact of the temperature difference on the determined consumption of energy.

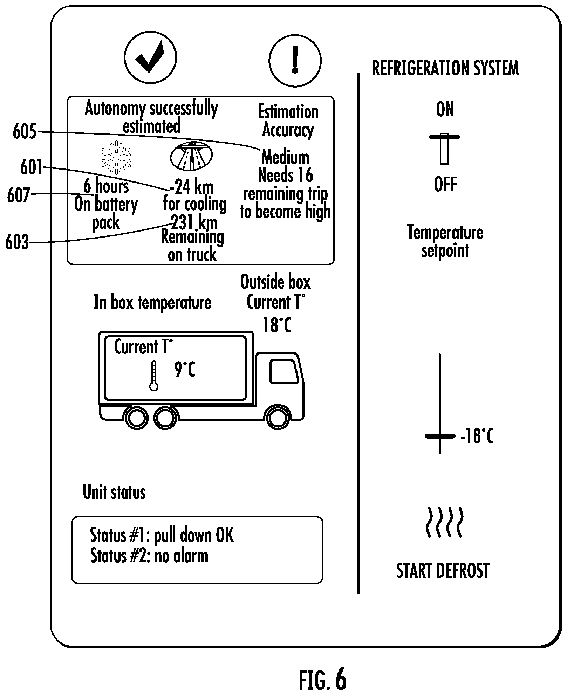

T the controller of the ECU 111 may also determine whether the updated distance is less than the calculated distance. If in a case it is determined that the updated distance is less than the calculated distance, then the controller of the ECU 111 may control the HMI 117 to display the current status of the remaining distance that can be traveled by the BEV 100 based on the determined consumption of energy. As a non-limiting example, the result of the estimation indicating the current status of the remaining distance is shown at 603 of the HMI interface in FIG. 6 of the drawings.

Tthe controller of the ECU 111 may also estimate a cooling time of the TRU 101 based on the determined consumption of energy and the determined temperature difference, and then control the HMI 117 to display a message, notifying the user an impact of the estimated cooling time of the TRU 101 on the calculated distance. A non-limiting example of the HMI interface indicating an impact of the estimated cooling time of the TRU 101 on the calculated distance is shown at 601 of **FIG. 6** of the drawings.

The displayed result of the estimation further indicates a level of accuracy of the estimation along with information related to the remaining hours of refrigeration capacity of the TRU 101 and the remaining autonomy of the BEV 100. Non-limiting examples of levels of accuracy of the estimation may correspond to one of a high accuracy level, average accuracy level, or low accuracy level. As a non-limiting example, a level of accuracy of the estimation along with information related to the remaining hours of refrigeration capacity of the TRU 101 is shown at 605 and 607, respectively in FIG. 6 of the drawings.

The controller of the ECU 111 may also display the results of the estimation on one of a Graphical User Interface (GUI) of a mobile application using a telematic connection or a GUI of an external device connected to the ECU 111 using a Wi-Fi or a Bluetooth connection. The results of the estimation may also be indicated to the user of the BEV 100 by the controller of the ECU 111 as an audio response from at least one of an audio source installed in the BEV 100. Those skilled in the art will appreciate that the aforementioned example methods of displaying or notifying the results of the estimation are merely exemplary and are not intended to limit the scope of the invention.

In particular, in accordance with the above-described embodiments, the displayed result of the estimation helps in providing information to the user of the BEV 100 or 200 about the refrigeration time of operation of the TRU 101 for the specific day, information regarding the number of kilometers that may be removed from the BEV autonomy, and information regarding the level of accuracy. This information may allow the user of the BEV 100 or 200 to better plan his daily operation, either to plan its recharge of the traction battery or power train or to adapt to his driving style or may even adapt his route to reduce the number of kilometers to be traveled by the BEV.

**FIG. 7** illustrates an exemplary hardware configuration of the ECU 111 or 211. The ECU 700 is similar in functionality to that of the ECU 111 of FIG. 1 or ECU 211 of FIG. 2.

The ECU 700 includes a controlling unit (CPU 701) that controls various system components including the system memory 703 such as read-only memory (ROM) 605 and random-access memory (RAM) 707. The ECU 700 further includes one or more sensors 709 configured to measure the temperature outside the TRU 101, speed of BEV 100, etc. The one or more sensors 709 may include, but are not limited to, temperature sensors, acceleration sensors, motion sensors, gyro sensors, oxygen sensor, air index measurement sensor, intake air temperature sensors, engine coolant temperature sensors, and the like.

The ECU 700 may also include a cache of high-speed memory connected directly with, in close proximity to, or integrated as part of the CPU 701. The CPU 701 copies data from the memory 703 to the cache for quick access. The CPU 701 may essentially be a completely self-contained computing system, containing multiple cores or processors, a bus, memory controller, cache, etc. (such as a system-on-chip). A multicore processor may be symmetric or asymmetric.

The ECU 700 may also include a system bus that may be any of several types of bus structures including a memory bus or memory controller, a peripheral bus, and a local bus using any of a variety of bus architectures. The ECU 701 may further include a storage device such as a hard disk drive, a magnetic disk drive, an optical disk drive, a tape drive, a solid-state drive, or the like. The storage device can include software modules that can be controlled and executed by the CPU 701. Other hardware or software modules are contemplated. The storage device may be connected to the ECU 700 by a drive interface. The drives and the associated computer-readable storage media provide nonvolatile storage of computer-readable instructions, data structures, program modules, and other data for the ECU. In one aspect, a hardware module that performs a particular function includes the software component stored in a tangible computer-readable storage medium in connection with the necessary hardware components, such as the CPU 701, input device 711, an output device 713, and so forth, to carry out the operations of the BEV 100. The basic components and appropriate variations are contemplated depending on the type of BEVs.

The ECU 701 may also include a communication interface 715. The communication interface 715 may be connected to a network such as a wireless network. The wireless networks may be a cellular telephone network, an IEEE 802.11, 802.16, 802.20, 802.1 Q or WiMax network. Further, the network may be a public network, such as the Internet, a private network, such as an intranet, or combinations thereof, and may utilize a variety of networking protocols now available or later developed including, but not necessarily limited to including TCP/IP based networking protocols.

The communication interface 715 may include a transceiver including a transmitter and a receiver along with an antenna 717 for receiving or transmitting data from or to a cloud network used in a vehicle-to-vehicle (V2V) communication.

As would be apparent to a person in the art, various working modifications may be made to the method in order to implement the inventive concept as taught herein.

Moreover, the actions of any flow diagram need not be implemented in the order shown; nor do all of the acts necessarily need to be performed. Also, those acts that are not dependent on other acts may be performed in parallel with the other acts.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

## Claims

1. A method for managing power consumption in a battery electric vehicle (BEV) (100, 200) having a transport refrigeration unit (TRU) (101, 201), comprising:
obtaining, via an electronic control unit (ECU) (111, 211) of the BEV, real time vehicle data including at least a state of charge of an energy storage unit of the BEV, each of a power limitation maximum current and a power limitation maximum voltage of the energy storage unit, a charging rate of the energy storage unit, information related to load conditions of the BEV, a health status of the energy storage unit, and live weather forecast information;
receiving, based on one of a user input or an acquisition from a remote database (119, 219), information regarding one or more deliveries that are planned by a user for a specific day;
determining a consumption of energy for completion of the one or more deliveries on the specific day based on the obtained real time vehicle data and the received information regarding the one or more deliveries;
calculating a distance that can be traveled by the BEV based on the determined consumption of energy;
determining, in real time, a temperature difference between an internal temperature of the TRU and an external temperature outside the TRU;
estimating an impact of the determined temperature difference on the determined consumption of energy; and
displaying a result of the estimation on a human machine interface (HMI) (117) of the BEV, indicating an updated distance that can be traveled by the BEV based on the estimated impact of the temperature difference.

2. The method as claimed in claim 1, further comprising:
calculating the updated distance that can be traveled by the BEV based on the estimated impact of the determined temperature difference on the determined consumption of energy, wherein the updated distance corresponds to one of a decrease or increase in the calculated distance; and
displaying the updated distance on the HMI; and/or
displaying, in a case if the updated distance is less than the calculated distance, a current status of a remaining distance that can be traveled by the BEV on the HMI based on the determined consumption of energy.

3. The method as claimed in claim 1 or 2, further comprising:
determining, using a machine learning model, information regarding a driving pattern of the user while completing one or more deliveries in past based on historical information of the user, wherein the historical information includes associated vehicle parameters related to activities of the user in the past; and
calculating the distance that can be traveled by the BEV based on the determined consumption of energy and the determined information regarding the driving pattern of the user.

4. The method as claimed in claim 3, wherein the associated vehicle parameters related to the activities of the user include at least a number of times BEV's doors are opened by the user, a duration for which the BEV's doors were kept open by the user, a number of times BEV's brakes are applied by the user while completing the one or more deliveries, an average acceleration of the BEV while completing the one or more deliveries, and a potential route taken by the user to complete the one or more deliveries in the past.

5. The method as claimed in any of claims 1 to 4, wherein the energy storage unit includes one or more batteries (103, 203).

6. The method as claimed in any of claims 1 to 5, wherein the ECU receives the real time vehicle data via one of a transceiver or an antenna included in the ECU.

7. The method as claimed in any of claims 1 to 6,
wherein the HMI is installed in a driving compartment of the BEV, and
wherein the user input is received via the HMI.

8. The method as claimed in any one of claims 1 to 7, wherein, for determining the temperature difference, the method further comprising:
detecting the internal temperature of the TRU using a temperature sensor installed within the TRU,
determining an external temperature outside the TRU using a pyranometer sensor, and
determining the temperature difference based on a difference between the internal temperature of the TRU and the external temperature outside the TRU;
and/or:
estimating a cooling time of the TRU based on the determined consumption of energy and the determined temperature difference; and
notifying, the user via the HMI, an impact of the estimated cooling time of the TRU based on the calculated distance.

9. The method as claimed in any of claims 1 to 8, wherein the live weather forecast information includes at least temperature information, humidity information, wind speed, a direction of the wind speed, and information indicating one of sunny or cloudy weather conditions.

10. The method as claimed in any of claims 1 to 9,
wherein the information related to the load conditions of the BEV includes at least a type of cargo of the BEV, a size of the cargo, weight of the cargo, and volume of goods in the cargo,
wherein the displayed result of the estimation further indicates a level of accuracy of the estimation along with information related to remaining hours of refrigeration capacity of the TRU and remaining autonomy of the BEV, and
wherein the level of accuracy of the estimation corresponds to one of a high accuracy level, average accuracy level, or low accuracy level; and/or
displaying the result of the estimation on one of a Graphical User Interface (GUI) of a mobile application using a telematic connection or a GUI of an external device connected to the ECU using a Wi-Fi or a Bluetooth connection.

11. A system for managing power consumption in a battery electric vehicle (BEV) (100, 200), comprising:
an electronic control unit ECU (111, 211) including a transceiver and at least one controller (113, 213);
an energy storage unit including one or more batteries (103, 203);
a transport refrigeration unit (TRU) (101, 201); and
a human machine interface (HMI) (117), wherein the at least one controller is configured to:
obtain, via the transceiver of the ECU, real time vehicle data including at least a state of charge of an energy storage unit of the BEV, each of a Power limitation maximum current and a power limitation maximum voltage of the energy storage unit, a charging rate of the energy storage unit, information related to load conditions of the BEV, a health status of the energy storage unit, and live weather forecast information;
receive, based on one of a user input via the HMI or data acquisition from a remote database (119, 219), information regarding one or more deliveries that are planned by a user for a specific day;
determine a consumption of energy for completion of the one or more deliveries on the specific day based on the obtained real time vehicle data and the received information regarding the one or more deliveries;
calculate a distance that can be traveled by the BEV based on the determined consumption of energy;
determine, in real time, a temperature difference between an internal temperature of the TRU and an external temperature outside the TRU;
estimate an impact of the determined temperature difference on the determined consumption of energy; and
control the HMI to display a result of the estimation indicating an updated distance that can be traveled by the BEV based on the estimated impact of the temperature difference.

12. The system as claimed in claim 11, wherein the at least one controller is further configured to:
calculate the updated distance that can be traveled by the BEV based on the determined temperature difference, wherein the updated distance corresponds to one of a decrease or increase in the calculated distance; and
control the HMI to display the updated distance;
and/or:
control, in a case if the updated distance is less than the calculated distance, the HMI to display a current status of a remaining distance that can be traveled by the BEV based on the determined consumption of energy.

13. The system as claimed in any claims 11 or 12, wherein the at least one controller is further configured to:
determine, using a machine learning model, information regarding a driving pattern of the user while completing one or more deliveries in past based on historical information of the user, wherein the historical information includes associated vehicle parameters related to activities of the user in the past; and
calculate the distance that can be traveled by the BEV based on the determined information regarding the driving pattern of the user and the determined consumption of energy,
optionally wherein the associated vehicle parameters related to the activities of the user include a number of times BEV's doors are opened by the user, a duration for which the BEV's doors were kept open by the user, a number of times BEV's brakes are applied by the user while completing the one or more deliveries, an average acceleration of the BEV while completing the one or more deliveries, and a potential route taken by the user to complete the one or more deliveries in the past.

14. The system as claimed in any of claims 11 to 13,
wherein the system further comprises a temperature sensor installed within the TRU and a pyranometer sensor, and
wherein, for determining the temperature difference, the at least one controller is further configured to:
detect the internal temperature of the TRU using the temperature sensor;
determine an external temperature outside the TRU using the pyranometer temperature sensor; and
determine the temperature difference based on a difference between the internal temperature of the TRU and the external temperature outside the TRU.

15. The system as claimed in any one of claims 11 to 14, wherein the at least one controller is further configured to:
estimate a cooling time of the TRU based on the determined consumption of energy and the determined temperature difference; and
control the HMI to notify an impact of the estimated cooling time of the TRU based on the calculated distance.
